# EUROPÄISCHE PATENTSCHRIFT

(11) **EP 0 644 839 B1**
(45) Veröffentlichungstag und Bekanntmachung des Hinweises auf die Patenterteilung: **10.04.1996**
(21) Anmeldenummer: 93912600.9
(22) Anmeldetag: 16.06.1993
(51) Int. Cl.: B60V 1/14

(54) **STEUERUNG FÜR EIN LUFTKISSENFAHRZEUG**
STEERING GEAR FOR A HOVERCRAFT
DIRECTION POUR VEHICULE A COUSSIN D'AIR

(30) Priorität: 17.06.1992 DE 4219826
(43) Veröffentlichungstag der Anmeldung: 29.03.1995
(73) Patentinhaber: ABS AIRCRAFT AG, CH-9403 Goldach (CH)
(72) Erfinder: BLUM, Albert, CH-2072 St-Blaise (CH); STIEGLER, Hartmut, D-4050 Mönchengladbach 1 (DE)
(74) Vertreter: Lippert, Hans-Joachim, Dipl.-Ing.
(86) Internationale Anmeldenummer: DE9300529
(87) Internationale Veröffentlichungsnummer: WO9325422

(56) Entgegenhaltungen:
- US-A- 4 151 893
- US-A- 4 249 628
- US-A- 5 096 012
- Patent Abstracts of Japan no.15427, 30.Oct 1991 & JP-A-3178857 (SORETSUKUSU KK) 2. August 1991

## Beschreibung

Die Erfindung betrifft eine Steuerung für ein Luftkissenfahrzeug, welches mit wenigstens einem Triebwerk zur Erzeugung des Vortriebs, sowie einem Kompressor zur Erzeugung eines unterhalb des Luftkissenfahrzeuges erzeugbaren Luftkissens versehen ist, und bei dem sich im Heckbereich eine Rudervorrichtung zur Steuerung der Fahrtrichtung befindet.

Luftkissenfahrzeuge sind üblicherweise mit einem Kompressor zur Erzeugung des benötigten Luftkissens innerhalb einer Gummischürze und mit wenigstens einem Triebwerk für die Geradeaus- und/oder Kurvenfahrt versehen. Die Steuerung der Kurvenfahrt erfolgt in der Regel durch eine seitliche Ablenkung des Luftstrahles des Triebwerkes. Für diese seitliche Ablenkung des Luftstrahles werden in der Regel aus dem Flugzeugbau bekannte Seitenruder verwendet, die unmittelbar im Luftstrahl angeordnet sind. Eine andere Möglichkeit zur Richtungssteuerung des Luftkissenfahrzeuges besteht darin, den Luftstrahl dadurch seitlich abzulenken, daß der Ausströmdiffusor oder das Triebwerk insgesamt verschwenkt werden,

Bei jeder Kurvenfahrt entsteht dabei allerdings in Abhängigkeit von der gefahrenen Geschwindigkeit eine mehr oder weniger starke Abdrift in Richtung zur Kurvenaußenseite, so daß die Steuerung derartiger Fahrmanöver wegen der großen benötigten Kurvenraden schwierig ist. Zusätzlich entsteht beim Befahren von Kurven durch die im Schwerpunkt angreifende Fliehkraft eine Neigung des Luftkissenfahrzeuges um die Querstabilitätsachse in Richtung zur Kurvenaußenseite. Dadurch bildet sich auf der Kurveninnenseite ein größerer Luftspalt zwischen der Gummischürze und dem Boden, bzw. der Wasseroberfläche, so daß auf dieser Seite zusätzlich Luft abgeblasen wird. Auf diese Weise entsteht neben der Fliehkraft eine zusätzliche Kraftkomponente, die eine Erhöhung der Abdrift bewirkt. Die Folge ist eine Vergrößerung der benötigten Kurvenradien in jedem Geschwindigkeitsbereich.

Dieser Effekt der Neigung des Luftkissenfahrzeuges um die Querstabilitätsachse in Richtung zur Kurvenaußenseite entsteht unabhängig davon, auf welche Weise die Kurvenfahrt gesteuert wird.

Eine ähnliche Wirkung erzielt auch Seitenwind, der eine Neigung des Luftkissenfahrzeuges um die Querachse in Richtung zur Leeseite bewirkt, so daß eine Verstärkung der Abdrift die Folge ist.

In der US-A-4 249 628 wird nun ein Luftkissenfahrzeug mit zwei im Heckbereich nebeneinander angeordneten Gebläsen für den Vortrieb beschrieben. Hinter jedem der Gebläse sind im Luftstrom innerhalb eines Luftkanales querruderähnliche Klappen um eine horizontale Achse schwenkbar angeordnet. Diese Klappen können zwischen einer normalen Position, in der deren Ebene parallel zur Achse des Luftkanales verläuft und einer voll wirksamen Stellung, in der die Klappen quer stehen, also den Luftstrom nahezu vollständig verschließen, bewegt werden. Darüber hinaus besitzt das Luftkissenfahrzeug übliche Seitenruder, die vorzugsweise jeweils hinter jedem Gebläse in deren Luftstrom angeordnet sind.

Dieses Lufkissenfahrzeug besitzt damit eine verhältnismäßig komplizierte Steuerung, da insgesamt vier aufeinander abgestimmte Klappen zu betätigen sind. Darüberhinaus wird bei einer Kurvenfahrt die Schubkraft reduziert, worunter auch die Wendigkeit des Luftkissenfahrzeuges leidet. Das ist auch dadurch bedingt, daß nur jeweils eines der Seitenruder voll wirksam sein kann, dessen Luftkanal bei Kurvenfahrt nicht verschlossen ist.

Aus der JP-A-3 178 857 geht eine andere Klappenanordnung hervor, bei der mehrere Rinder im Luftstrom hinter einem Propeller angeordnet sind. Zur Richtungssteuerung sind ein oberes um eine vertikale Achse verschwenkbares Rinder und zwei untere Ruder in einer flachen negativen V-Anordnung vorgesehen. Durch die gleichsinnige Anstellung aller Rinder kann die Fahrtrichtung gesteuert werden, wobei dasjenige untere Ruder, welches nach unten angestellt ist, gleichzeitig eine Neigung des Fahrzeuges in Kurvenrichtung erzeugt. Der Betrag der Neigung dürfte aber eher bescheiden ausfallen.

Der Erfindung liegt deshalb die Aufgabe zugrunde, eine Steuerung für ein Luftkissenfahrzeug zu schaffen, mit der eine wesentliche Verbesserung der Kurvenfahrt und eine deutliche Verringerung der Kurvenradien in allen Geschwindigkeitsbereichen erreicht wird.

Die Erfindung bezieht sich auf eine Steuerung für ein Luftkissenfahrzeug mit zwei im Heckbereich nebeneinander angeordneten Triebwerken zur Erzeugung des Vortriebes, sowie einem Triebwerk zur Erzeugung eines unterhalb des Luftkissenfahrzeuges erzeugbaren Luftkissens und bei dem sich im Luftstrom hinter den nebeneinander befindlichen Triebwerken eine Strahlablenkvorrichtung zur Steuerung der Fahrtrichtung befindet.

Die der Erfindung zugrundeliegende Aufgabe wird dadurch gelöst, daß die Strahlablenkvorrichtung aus einem V-Leitwerk mit negativer V-Anordnung und gegensinnig betätigbaren Rinderelementen besteht, daß das V-Leitwerk in der Weise angeordnet ist, daß jedem Triebwerk ein mit einem Ruderelement versehener Schenkel des V-Leitwerkes zugeordnet ist, der diagonal durch die Symmetrieachse des jeweiligen Triebwerkes verläuft und daß das V-Leitwerk einen mittleren Bereich aufweist, der als Stabilisierungsnase ausgebildet ist.

Durch die erfindungsgemäße einfache Steuerung mittels des V-Leitwerkes mit negativer V-Anordnung wird in Verbindung mit den gegensinnig betätigbaren Ruderelementen bei einer Kurvenfahrt eine der Fliehkraft entgegenwirkende Kraftkomponente erzeugt, die oberhalb des Massenschwerpunktes angreift, so daß sich das Luftkissenfahrzeug in Richtung zur Innenseite der eingeleiteten Kurve neigt.

Diese Neigung in Richtung zur Kurveninnenseite bewirkt, daß auf dieser Seite der Luftspalt zwischen der Unterkante der Gummischürze und dem Boden, bzw. der Wasseroberfläche verringert und auf der Kurvenaußenseite vergrößert wird. Damit entsteht eine zusätzliche Kraftkomponente in Richtung zur Kurveninnenseite, die das Abdriften des Luftkissenfahrzeuges reduziert und gleichzeitig die Manövrierfähigkeit bei Langsamfahrt deutlich verbessert. Die Verringerung des Abdriftens hat gleichzeitig die Verringerung der erreichbaren Kurvenradien zur Folge.

Die Ablenkung des Luftstrahles erfolgt dabei derart, daß der Luftstrahl des kurveninneren Triebwerkes gleichsinnig zur Kurve und gleichzeitig nach oben abgelenkt, oder der Luftstrahl des kurvenäußeren Triebwerkes gleichsinnig zur vorgesehenen Kurve und gleichzeitig nach unten abgelenkt wird. Durch diese Ablenkung des Luftstrahles wird die erforderliche Neigung des Luftkissenfahrzeuges um die Querachse in Richtung zur Kurveninnenseite erreicht.

Eine weitere Fortbildung der Erfindung ist dadurch gekennzeichnet, daß der Luftstrahl des kurveninneren Triebwerkes gleichsinnig zur vorgesehenen Kurve und gleichzeitig nach oben und/oder daß der Luftstrahl des kurvenäußeren Triebwerkes gleichsinnig zur vorgesehenen Kurve und gleichzeitig nach unten ablenkbar ist. Dadurch, daß die Luftstrahlen beider Triebwerke gleichzeitig auf die beschriebene Weise abgelenkt werden, wird die Manövrierfähigkeit insbesondere bei Langsamfahrt deutlich verbessert.

In einer weiteren Ausgestaltung der Erfindung erstrecken sich die Ruderelemente über den gesamten Durchmesser der Triebwerke, so daß sich eine besonders gute Ruderwirkung ergibt, die noch dadurch verbessert werden kann, wenn das V-Leitwerk unmittelbar an den Auslassdiffusoren der Triebwerke befestigt wird.

In einer weiteren Ausgestaltung der Erfindung überragt das V-Leitwerk wenigstens mit seinem dachkantförmigen mittleren Bereich die Kontur des Luftkissenfahrzeuges. Dadurch wird bei höheren Geschwindigkeiten eine deutliche Verbesserung der Richtungsstabilität erreicht.

Weiterhin gehen die Unterkanten des V-Leitwerkes bogenförmig in die Seitenlinie des Luftkissenfahrzeuges über, so daß durch Wirbelbildungen bewirkte Strömungsverluste verringert werden.

Die Erfindung soll nachstehend an einem Ausführungsbeispiel näher erläutert werden. In der zugehörigen Zeichnung zeigen:
- Fig. 1: eine perspektivische Rückansicht eines erfindungsgemäß mit einem negativen V-Leitwerk versehenen Luftkissenfahrzeuges;
- Fig. 2: die Rückansicht nach Fig. 1 mit neutraler Stellung der Ruderelemente für Geradeausfahrt;
- Fig. 3: die Stellung der Ruderelemente bei Linkskurven; und
- Fig. 4: die Stellung der Ruderelemente bei Rechtskurven.

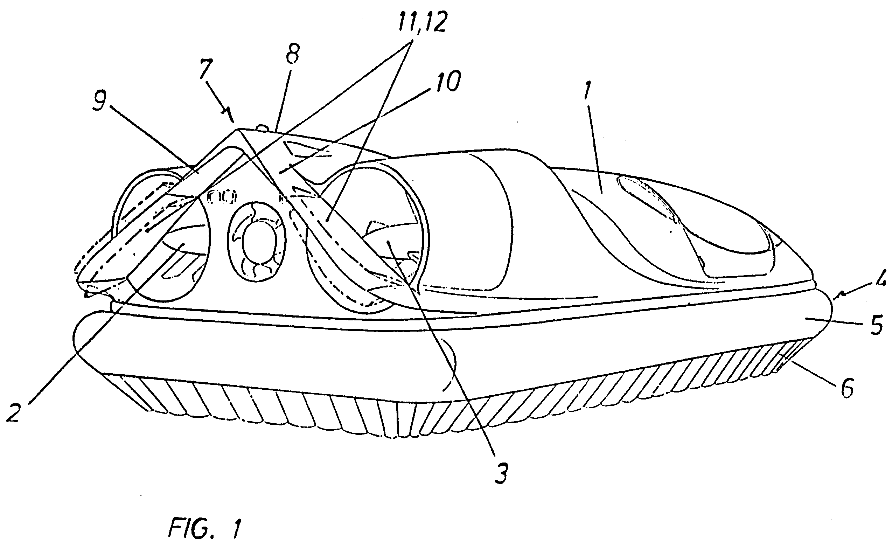

Gemäß Fig. 1 ist ein Luftkissenfahrzeug im Heckbereich der Karosserie 1 mit zwei seitlich angeordneten Triebwerken 2, 3 zur Erzeugung des Vortriebes versehen. Unterhalb der Karosserie 1 befindet sich eine an dieser befestigte umlaufende Gummischürze 4, die aus einem back skirt 5 und einem finger skirt 6 besteht. Hinter den Triebwerken 2, 3 ist ein negatives V-Leitwerk 7 angeordnet, dessen mittlerer oberer Bereich als Stabilisierungsnase 8 ausgebildet ist, der über der Kontur der Karosserie 1 hervorsteht. Das Leitwerk 7 ist dabei derart ausgebildet, daß sich die beiden abwärts gerichteten Leitwerksflächen 9, 10 mittig über die Triebwerke 2, 3 erstrecken. Desweiteren sind die Leitwerksflächen 9, 10 mit Ruderelementen 11, 12 versehen, die sich über den gesamten Durchmesser der Triebwerke 2, 3 erstrecken, wobei die Rinderelemente 11, 12 gegensinnig betätigbar sind.

Um besonders günstige Strömungsverhältnisse zu schaffen, ist das V-Leitwerk 7 unmittelbar an den Auslassdiffusoren der Triebwerke 2, 3 befestigt. Die Ruderelemente verlaufen dabei diagonal durch die Symmetrieachse des jeweiligen Triebwerkes 2, 3. Desweiteren besitzt das V-Leitwerk 7 einen dachkantförmigen mittleren Bereich, der als Stabilisierungsnase 8 ausgebildet ist und in Richtung zum Heck des Luftkissenfahrzeuges kontinuierlich ansteigt. Diese Stabilisierungsnase 8 bewirkt eine deutliche Verbesserung der Richtungsstabilität bei Geradeausfahrt und höheren Geschwindigkeiten.

Zur Vermeidung von Strömungsverlusten durch Wirbelbildung sind die Unterkanten des V-Leitwerkes 7 derart ausgebildet, daß sie bogenförmig in die Seitenlinie der Karosserie 1 des Luftkissenfahrzeuges übergehen.

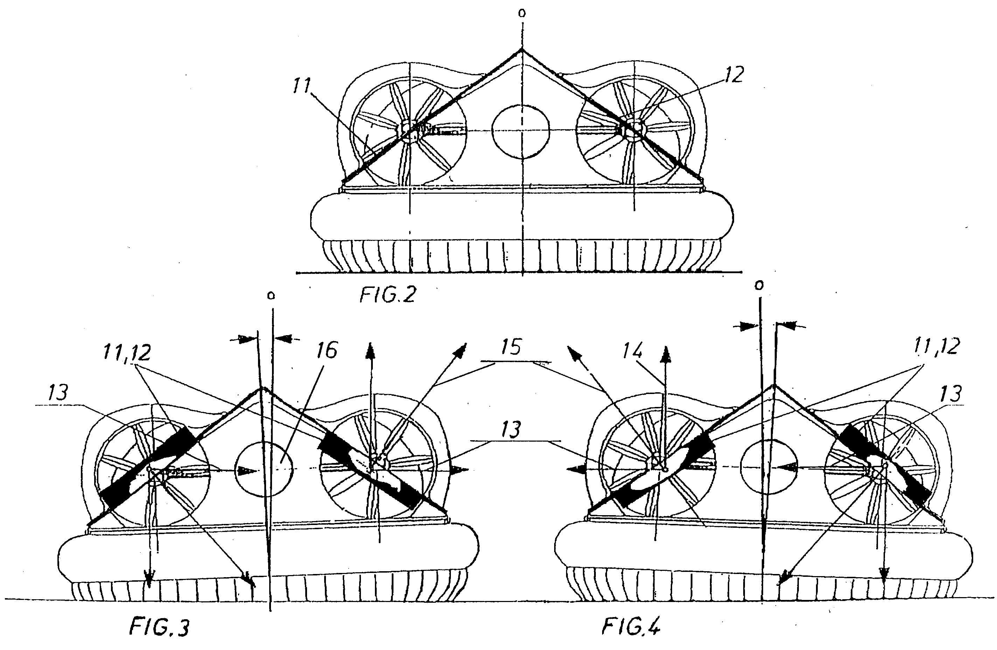

Bei Geradeausfahrt (Fig. 2) befinden sich die Ruderlemente 11, 12 in ihrer neutralen Stellung, in der sie gemeinsam mit den Leitwerksflächen 9, 10 jeweils eine Fläche bilden. In dieser Stellung erfolgt keinerlei Ablenkung der aus den Triebwerken 2, 3 geblasenen Luft.

Zur Einleitung einer Kurve, beispielsweise nach links (Fig. 3) werden die Ruderlelemente 11, 12 gegensinnig angestellt, d.h. das Ruderelement 11 wird nach oben und das Ruderlement 12 nach unten bewegt. Auf Grund dessen, daß der Luftstrahl jedes Triebwerkes um den gleichen Betrag nach links abgelenkt wird, wird eine Linkskurve gefahren. Dadurch daß die Ruderelemente 11, 12 des negativen V-Leitwerkes 7 gegensinnig betätigt werden, wird der Luftstrahl des linken Triebwerkes 2 gleichzeitig nach oben und der Luftstrahl des rechten Triebwerkes 3 gleichzeitig nach unten abgelenkt. Dadurch entsteht beim Einleiten der Linkskurve ein Drehmoment, welches das Luftkissenfahrzeug um die Querachse in Richtung zur Kurveninnenseite neigt, wobei der Betrag der Neigung vom Anstellwinkel der Ruderelemente 11, 12 abhängig ist. Das bedeutet, je größer der Anstellwinkel der Ruderelemente 11, 12 gewählt wird, um so größer wird die Neigung des Luftkissenfahrzeuges um die Querachse, wobei der Betrag der Neigung gleichzeitig von der gefahrenen Geschwindigkeit abhängt. Aus Fig. 3 ist die Zusammensetzung des Kräfteparallelogrammes, bestehend aus jeweils einer Seitenkraft 13, einer Aufwärtskraft 14 und einer Resultierenden 15 ersichtlich. Die Addition beider Resultierenden 15 ergibt ein Drehmoment um die Querstabilitätsachse des Luftkissenfahrzeuges.

Entsprechende Kräfteverhältnisse stellen sich bei der Einleitung einer Rechtskurve ein (Fig. 4), d.h. die Ruderelemente 11, 12 werden dabei um jeweils den gleichen Anstellwinkel derart angestellt, daß das Ruderelement 11 nach unten und das Ruderelement 12 nach oben bewegt wird. Das Ergebnis ist eine Neigung des Luftkissenfahrzeuges um die Querachse, und zwar nach rechts in Richtung zur Kurveninnenseite.

Diese Neigung in Richtung zur Kurveninnenseite bewirkt, daß auf dieser Seite der Luftspalt zwischen der Unterkante der Gummischürze 4 und dem Boden, bzw. der Wasseroberfläche verringert und auf der Kurvenaußenseite vergrößert wird. Damit entsteht eine zusätzliche Kraftkomponente in Richtung zur Kurveninnenseite, die das Abdriften des Luftkissenfahrzeuges reduziert und gleichzeitig die Manövrierfähigkeit bei Langsamfahrt deutlich verbessert.

Der Zwischenraum zwischen den Triebwerken 2, 3, der durch das überstehende Leitwerk 7 überdeckt wird, kann gleichzeitig zur Anordnung eines Kühlgebläses 16 zur Kühlung eines innerhalb der Karosserie 1 angeordneten Motors genutzt werden.

### Bezugszeichenliste

- 1: Karosserie
- 2: Triebwerk
- 3: Triebwerk
- 4: Gummischürze
- 5: back skirt
- 6: finger skirt
- 7: Leitwerk
- 8: Stabilisierungsnase
- 9: Leitwerksfläche
- 10: Leitwerksfläche
- 11: Ruderelement
- 12: Ruderelement
- 13: Seitenkraft
- 14: Aufwärtskraft
- 15: Resultierende
- 16: Gebläse

## Patentansprüche

1. Steuerung für ein Luftkissenfahrzeug mit zwei im Heckbereich nebeneinander angeordneten Triebwerken (2, 3) zur Erzeugung des Vortriebes, sowie einem Triebwerk zur Erzeugung eines unterhalb des Luftkissenfahrzeuges erzeugbaren Luftkissens und bei dem sich im Luftstrom hinter den nebeneinander befindlichen Triebwerken (2, 3) eine Strahlablenkvorrichtung zur Steuerung der Fahrtrichtung befindet, **dadurch gekennzeichnet,** daß die Strahlablenkvorrichtung aus einem V-Leitwerk (7) mit negativer V-Anordnung und gegensinnig betätigbaren Ruderelementen (11, 12) besteht, daß das V-Leitwerk (7) in der Weise angeordnet ist, daß jedem Triebwerk (2, 3) ein mit einem Ruderelement (11; 12) versehener Schenkel des V-Leitwerkes (7) zugeordnet ist, der diagonal durch die Symmetrieachse des jeweiligen Triebwerkes (2, 3) verläuft und daß das V-Leitwerk (7) einen mittleren Bereich aufweist, der als Stabilisierungsnase (8) ausgebildet ist.

2. Steuerung für ein Luftkissenfahrzeug nach Anspruch 1, **dadurch gekennzeichnet,** daß der Luftstrahl des kurveninneren Triebwerkes (2; 3) gleichsinnig zur Kurve und gleichzeitig nach oben ablenkbar ist.

3. Steuerung für ein Luftkissenfahrzeug nach Anspruch 1, **dadurch gekennzeichnet,** daß der Luftstrahl des kurvenäußeren Triebwerkes (2; 3) gleichsinnig zur vorgesehenen Kurve und gleichzeitig nach unten ablenkbar ist.

4. Steuerung für ein Luftkissenfahrzeug nach einem der vorstehenden Ansprüche, **dadurch gekennzeichnet,** daß der Luftstrahl des kurveninneren Triebwerkes (2; 3) gleichsinnig zur vorgesehenen Kurve und gleichzeitig nach oben und/oder daß der Luftstrahl des kurvenäußeren Triebwerkes (2; 3) gleichsinnig zur vorgesehenen Kurve und gleichzeitig nach unten ablenkbar ist.

5. Steuerung für ein Luftkissenfahrzeug nach einem der Ansprüche 1 bis 4, **dadurch gekennzeichnet,** daß sich die Ruderelemente (11; 12) über den gesamten Durchmesser der Triebwerke (2; 3) erstrecken.

6. Steuerung für ein Luftkissenfahrzeug nach einem der Ansprüche 1 bis 5, **dadurch gekennzeichnet,** daß das V-Leitwerk (7) unmittelbar an den Auslaßdiffusoren der Triebwerke (2; 3) befestigt ist.

7. Steuerung für ein Luftkissenfahrzeug nach den Ansprüchen 1 bis 6, **dadurch gekennzeichnet,** daß das V-Leitwerk (7) wenigstens mit seinem dachkantförmigen mittleren Bereich die Kontur des Luftkissenfahrzeuges überragt.

8. Steuerung für ein Luftkissenfahrzeug nach den Ansprüchen 1 bis 7, **dadurch gekennzeichnet,** daß die Unterkanten des V-Leitwerkes (7) bogenförmig in die Seitenlinie der Karosserie (1) des Luftkissenfahrzeuges übergehen.

## Claims

1. Steering device for a hovercraft having two engines (2,3) arranged next to each other at the stern to drive it and an engine to provide an air-cushion which can be generated below the craft, and in which a jet deflection device is located in the air jet downstream of the two adjacent engines (2,3) in order to control the direction of travel, characterised in that the jet deflection device comprises a Vee stream deflector (7) with a negative Vee arrangement and rudder elements (11,12) which can be operated in opposite directions, that the Vee stream deflector (7) is arranged in such a way that each engine (2,3) is assigned a limb of the Vee stream deflector (7), provided with a rudder element (11;12), which runs diagonally through the axis of symmetry of the respective engine (2,3), and that the Vee stream deflector (7) displays a middle section which is designed as a stabilising nose (8).

2. Steering device for a hovercraft as per Claim 1, characterised in that the air jet of the engine (2;3) on the inside of the curve can be deflected both in the direction of the curve and upwards at the same time.

3. Steering device for a hovercraft as per Claim 1, characterised in that the air jet of the engine (2;3) on the outside of the curve can be deflected both in the direction of the curve and downwards at the same time.

4. Steering device for a hovercraft as per one of the prior Claims, characterised in that the air jet of the engine (2;3) on the inside of the curve can be deflected in the direction of the curve and upwards at the same time and/or that the air jet of the engine (2;3) on the outside of the curve can be deflected in the direction of the curve and downwards at the same time.

5. Steering device for a hovercraft as per one of the Claims 1 to 4, characterised in that the rudder elements (11;12) extend across the entire diameter of the engines (2;3).

6. Steering device for a hovercraft as per one of the Claims 1 to 5, characterised in that the Vee stream deflector (7) is fitted directly to the exhaust diffusors of the engines (2;3).

7. Steering device for a hovercraft as per one of the Claims 1 to 6, characterised in that at least the roof edge-shaped middle section of the Vee stream deflector (7) protrudes beyond the contour of the hovercraft.

8. Steering device for a hovercraft as per Claims 1 to 7, characterised in that the bottom edges of the Vee stream deflector (7) blend into the side of the hovercraft bodywork (1) in arch form.

## Revendications

1. Commande pour un véhicule à coussin d'air qui comporte deux propulseurs (2,3) disposés côte à côte à l'arrière pour la production de la poussée, ainsi qu'un groupe moteur pour la création d'un coussin d'air pouvant être créé au-dessous du véhicule, et dans lequel un dispositif de déflexion du jet pour la commande de la direction de marche se trouve dans le courant d'air en arrière des propulseurs (2,3) disposés côte à côte, caractérisée en ce que le dispositif de déflexion du jet est constitué par un empennage en V (7) à disposition négative du V et avec éléments de gouvernail (11,12) manoeuvrables en sens inverses, en ce que l'empennage en V (7) est disposé de telle manière qu'à chaque propulseur (2,3) est adjoint un côté de l'empennage en V (7), qui est muni d'un élément de gouvernail (11;12) et qui s'étend en diagonale en passant par l'axe de symétrie du propulseur (2,3) respectif, et en ce que l'empennage en V (7) comporte une partie médiane qui est réalisée sous forme de nez de stabilisation (8).

2. Commande pour un véhicule à coussin d'air selon la revendication 1, caractérisée en ce que le jet d'air du propulseur (2;3) situé à l'intérieur du virage peut être dévié dans le même sens que le virage et en même temps vers le haut.

3. Commande pour un véhicule à coussin d'air selon la revendication 1, caractérisée en ce que le jet d'air du propulseur (2,3) situé à l'extérieur du virage peut être dévié dans le même sens que le virage prévu et en même temps vers le bas.

4. Commande pour un véhicule à coussin d'air selon l'une quelconque des revendications 1 à 3, caractérisée en ce que le jet d'air du propulseur (2,3) situé à l'intérieur du virage peut être dévié dans le même sens que le virage prévu et en même temps vers le haut et/ou en ce que le jet d'air du propulseur (2,3) situé à l'extérieur du virage peut être dévié dans le même sens que le virage prévu et en même temps vers le bas.

5. Commande pour un véhicule à coussin d'air selon l'une quelconque des revendications 1 à 4, caractérisée en ce que les éléments de gouvernail (11;12) s'étendent sur toute la longueur du diamètre des propulseurs (2,3).

6. Commande pour un véhicule à coussin d'air selon l'une quelconque des revendications 1 à 5, caractérisée en ce que l'empennage en V (7) est fixé directement sur les diffuseurs d'échappement des propulseurs (2,3).

7. Commande pour un véhicule à coussin d'air selon l'une quelconque des revendications 1 à 6, caractérisée en ce que l'empennage en V (7) dépasse en hauteur le contour du véhicule à coussin d'air, au moins par sa partie médiane en forme d'arête de toit.

8. Commande pour un véhicule à coussin d'air selon l'une quelconque des revendications 1 à 7, caractérisée en ce que les bords inférieurs de l'empennage en V (7) se raccordent en arc de cercle à la ligne latérale de la carrosserie (1) du véhicule à coussin d'air.
